Europäisches Patentamt

European Patent Office

Office européen des brevets

(19)

(11) Veröffentlichungsnummer: **0 281 761 B1**

# EUROPÄISCHE PATENTSCHRIFT

(12)

(45) Veröffentlichungstag der Patentschrift: **12.06.91**

(51) Int. Cl.5: **A01C 7/04**

(21) Anmeldenummer: **88101589.5**

(22) Anmeldetag: **04.02.88**

(54) **Einzelkorndrillmaschine.**

(30) Priorität: 12.02.87 DE 3704308
13.03.87 DE 3708207
10.06.87 DE 3719270

(43) Veröffentlichungstag der Anmeldung:
**14.09.88 Patentblatt 88/37**

(45) Bekanntmachung des Hinweises auf die
Patenterteilung:
**12.06.91 Patentblatt 91/24**

(84) Benannte Vertragsstaaten:
**FR GB NL**

(56) Entgegenhaltungen:
BE-A- 890 051         DE-A- 2 843 487
DE-A- 3 122 331     DE-A- 3 500 885
DE-A- 3 500 886     DE-C- 2 428 485
GB-A- 2 024 586     GB-A- 2 105 162

(73) Patentinhaber: **Amazonen-Werke H. Dreyer
GmbH & Co. KG
Am Amazonenwerk 9-13
W-4507 Hasbergen-Gaste(DE)**

(72) Erfinder: **Scheufler, Bernd, Dr.
Am Amazonenwerk 101
W-4507 Hasbergen(DE)**
Erfinder: **Kemper, Martin
Fontanestrasse 15
W-4506 Hagen a. TW(DE)**
Erfinder: **Volmer, Hubert
Im Brook 1
W-4506 Hagen a. TW(DE)**

## Beschreibung

Die Erfindung betrifft eine Vorrichtung gemäß des Oberbegriffes des Anspruches 1.

Derartige Vorrichtungen, die aus einem Ackerschlepper und einer an dem Dreipunktkraftheber des Ackerschleppers angeordneten Verteilmaschine bestehen, sind in der landwirtschaftlichen Praxis bekannt. Vielfach sind die Verteilmaschinen als Einzelkorndrillmaschinen ausgebildet. Die Vereinzelungsorgane der Einzelkornsägeräte dieser Einzelkorndrillmaschinen werden über ein als Wechselradgetriebe ausgebildetes Zentralgetriebe von einem Laufrad der Maschine angetrieben. Durch die Wahl eines bestimmten Übersetzungsverhältnisses des Wechselradgetriebes läßt sich der Ablegeabstand der einzelnen Saatkörner zueinander einstellen. Die Anzahl der pro Flächeneinheit auszusäenden Saatkörner ist widerum abhängig von dem Ablegeabstand der einzelnen Saatkörner zueinander. Da der Antrieb des Wechselradgetriebes von einem Laufrad der Einzelkornsämaschine erfolgt, ergibt sich ein geschwindigkeitsabhäniger Antrieb der Vereinzelungsorgane. Die Anzahl der auszusäenden Saatkörner pro Flächeneinheit richtet sich nach dem jeweiligen Standort, d.h., nach der jeweiligen Bodenart und den vorherrschenden Verhältnissen des Saatbettes, in dem das Saatgut abgelegt werden soll. Da die Bodenverhältnisse eines landwirtschaftlichen Betriebes aber selten überall gleich sind, variiert die Anzahl der auszusäenden Saatkörner pro Flächeneinheit, so daß das Wechselradgetrieb des öfteren an Hand von Sätabellen verstellt werden muß, was sehr umständlich ist. Dieses relativ umständliche Anpassen der pro Flächeneinheit auszusäenden Saatkörner an die jeweils vorherrschenden Bodenverhältnisse macht sich besonders bei Lohnunternehmern bemerkbar, bei denen die Maschinen auf sehr vielen unterschiedlichen Ackerflächen eingesetzt werden. Da sich der Ablegeabstand der einzelnen Saatkörner zueinander - wodurch die Anzahl der pro Flächeneinheit abgelegten Saatkörner bestimmt wird - nur durch das Umstecken eines Zahnrades des Wechselradgetriebes im Stillstand der Maschine verändern läßt, wird der eingestellte Ablegeabstand der Saatkörner in der landwirtschaftlichen Praxis nur sehr selten verändert, schon gar nicht auf einer Ackerfläche. Um aber nun die gewünschte Anzahl der pro Flächeneinheit auflaufenden Pflanzen - beispielsweise 90.000 Pflanzen auf einer Ackerfläche von einem Hektar - zu erhalten, ist es bei wechselnden Bodenverhältnissen einer Ackerfläche erforderlich, eine Anpassung der Anzahl der auszusäenden Saatkörner an die jeweiligen vorherrschenden Bodenarten oder -verhältnisse vorzunehmen, d.h., an einigen Stellen der Ackerfläche muß die Anzahl der pro Flächeneinheit auszusäenden Saatkörner erhöht werden, da der Erwartungswert der an diesen Stellen auflaufenden Pflanzen - bedingt durch die vorherrschenden Bodenverhältnisse - geringer ist. An diesen Stellen müßten eigentlich mehr Saatkörner ausgebracht werden, um ein gleichmäßiges Auflaufen der Pflanzen über die gesamte Ackerfläche zu erreichen. Bei den bekannten, mit Wechselradgetrieben ausgestatteten Einzelkorndrillmaschinen ist es jedoch nicht möglich, die Anzahl der pro Flächeneinheit auszusäenden Saatkörner während des Saatvorganges beliebig zu verändern.

Durch die DE-OS 35 00 886 ist eine aus einem Schlepper und einem an dem Schlepper angekoppelten Anbaugerät bestehende Landmaschine mit einem elektronischen Dosiergerät bekannt.

Dieses elektronische Dosiergerät ist für verschiedene Anbaugeräte ausgelegt. Es besteht aus einem Mikroprozessor und einem Grundelement, das mit an den an dem jeweiligen Anbaugerät angeordneten Sensoren verbunden ist. Das Dosiergerät umfaßt ein Codierungssystem zum Erkennen der jeweiligen Besonderheiten des Anbaugerätes bzw. der an diesen Geräten angeordneten Sensoren. Hierdurch entfällt die sich ständig wiederholende Eingabe maschinenspezifischer Werte durch den Landwirt. Der Landwirt muß lediglich die gewünschte Ausbringmenge in den Mikroprozessor eingeben, falls diese von dem Wert der evtl. schon gespeicherten Ausbringmenge abweicht, und der Mikroprozessor steuert die Einstellung der Dosierorgane. Während des Ausbringens des Materials werden laufend von den Sensoren aufgenommene Signale, die proportional der momentanen Ausbringmengen und der tatsächlichen Fahrgeschwindigkeit sind, an den Mikroprozessor übermittelt. Dieser führt ständig einen Vergleich zwischen Ist- und Sollwert durch. Bei einer Abweichung zwischen Ist- und Sollwert wird automatisch eine Verstellung der Dosierorgane vorgenommen, so daß die gewünschte Ausbringmenge pro Flächeneinheit immer exakt eingehalten wird.

Die DE-OS 35 00 886 beschäftigt sich mit einem elektronischen Dosiergerät, das an verschiedene, an einen Schlepper ankoppelbare Anbaugeräte anbringbar ist und mit einem Codierungssystem zum Erkennen der jeweiligen Besonderheiten des Anbaugerätes bzw. der Sensoren ausgestattet ist. Auf die Art und Weise der Regelung der Dosierorgane der hier beispielhaft angeführten Maschinen wird nicht eingegangen.

Des weiteren ist durch die DE-OS 35 00 885 ein elektronisches System für landwirtschaftliche Verteilmaschinen bekannt. Dieses System weist einen Mikroprozessor mit zu besetzenden verschiedenen Speicherplätzen und eine Eingabetastatur auf. Auf den Speicherplätzen sind verschiedene, den Gut- oder Materialausfluß repräsentierende Werte speicherbar und bei Bedarf abrufbar. Weiterhin sind in dem Mikroprozessor die für die verschiedenen Verteilmaschinen spezifischen Werte gespeichert, so daß es dem Mikroprozessor möglich ist, die von den an den Verteilmaschinen angeordneten Aufnahmesensoren gelieferten Impulse richtig zu Verarbeiten bzw. Interpretieren. Anhand der von den jeweiligen Sensoren der verschiedenen Verteilmaschinen aufgenommenen und an den Mikroprozessor weitergeleiteten Impulsen erfolgt eine Umrechnung dieser Impulse unter Berücksichtigung der jeweiligen gespeicherten spezifischen Werte und ergeben so den für die momentane Ausbringmenge repräsentativen Wert bzw. die Anzahl der tasächlich ausgebrachten Saatkörner unter Berücksichtigung der ebenfalls ermittelten, tatsächlichen Fahrgeschwindigkeit. Dieser Offenlegungsschrift ist nirgens ein Hinweis zur Regelung der Dosierorgane der beispielhaft angeführten Maschinen zu entnehmen.

In der DE-PS 24 28 485 wird eine gattungsgemäße Verteilmaschine, die als Einzelkorndrillmaschine ausgebildet ist, beschrieben. Die Dosierorgane dieser Einzelkorndrillmaschine werden von einem als Hydro-Motor ausgebildeten regelbaren Antriebsmotor angetrieben. Dem Antriebsmotor ist ein Bypassventil als Abschalteinrichtung zugeordnet, so daß bei einem Stillstand der Maschine der Hydro-Motor automatisch abgeschaltet wird, um so das Ausbringen von Saatgut zu unterbrechen. Diese Abschaltvorrichtung weist weiterhin einen Sensor auf, um den Stillstand der Maschine und somit das Unterbrechen des Ausbringvorganges von Saatgut festzustellen. Dieser Sensor ist als Wegmeßeinrichtung ausgebildet. In der Praxis hat es sich nun aber gezeigt, daß eine Wegemaßeinrichtung nicht als Stillstandssensor geeignet ist. Aufgrund der Massenträgheit dreht das Rad, an dem der Sensor angeordnet, sich noch weiter, wenn die Maschine ausgehoben wird und das Rad vom Boden frei kommt.

Der Erfindung liegt nun die Aufgabe zugrunde, auf einfache Weise eine sicher funktionierende Abschalteinrichtung für den Antriebsmotor der Verteilmaschine zu schaffen.

Diese Aufgabe wird in erfindungsgemäßer Weise durch die kennzeichnenden Maßnahmen des Anspruches 1 gelöst.

Durch den Sensor werden beim Anheben oder Absenken des Dreipunktkrafthebers entsprechende Signale an die Abschalt- oder Einschalteinrichtung des Antriebsmotors übermittelt, so daß der Antriebsmotor beim Anhalten der Maschine abgeschaltet wird.

Das automatische Unterbrechen des Dosierorganantriebes während einer Unterbrechung des Ausbringvorganges, beispielsweise beim Wenden am Feldende, läßt sich auf alle Verteilmaschinen übertragen, deren Dosiereinrichtungen von einem regelbaren Antriebsmotor angetrieben werden. Diese Verteilmaschinen können verschiedenartig ausgebildet sein. Beispielsweise kann es sich bei diesen Maschinen um pneumatische Verteilmaschinen wie Düngerstreuer, Einzelkorndrillmaschinen mit mehreren nebeneinander angeordneten Einzelkornsägeräten oder Sämaschinen gemäß des Standes der Technik handeln.

Um die Regelung des Antriebsmotors beim Abschalten des Antriebsmotors beim Unterbrechen des Ausbringvorganges für die erwähnten Verteilmaschinen in vorteilhafter Weise weiterzubilden ist erfindungsgemäß vorgesehen, daß eine Regeleinrichtung für den Antriebsmotor vorgesehen ist, daß über die Regeleinrichtung der Antriebsmotor in einem Regelkreis angeordnet ist, dessen Führungsgröße die aktuelle Fahrgeschwindigkeit der Verteilmaschine während des Ausbringvorganges ist, daß bei Abschalten des Antriebsmotors die Regelung für den Antriebsmotor unterbrochen wird.

Infolge dieser Maßnahmen wird erreicht, daß die Regeleinrichtung des Antriebsmotors die Stellung beibehält, die sie unmittelbar vor Beendigung des Ausbringvorganges, gehabt hat, so daß dann bei Wiederaufnahme des Ausbringvorganges ohne eine lange Totzeit, der Ausbringvorgang mit der gewünschten Einstellung fortgesetzt werden kann. Es wird also durch die erfindungegemäße Maßnahme vermieden, daß beim Unterbrechen des Ausbringvorganges, wenn die Fahrgeschwindigkeit 0 wird, ebenfalls aufgrund dessen, da die Fahrgeschwindigkeit die Führungsgröße für den Regelkreis der Regeleinrichtung ist, die Regeleinrichtung ebenfalls bis zum Stillstand des Antriebsmotors heruntergeregelt und anschließend bei Beginn des Ausbringvorganges wieder hochgeregelt werden muß, bis zu der gewünschten Stellung entsprechend der Sollausbringmenge. Durch die erfindungsgemäße Maßnahme entfällt also diese neue Einregelung über die lange Totzeit, da bei Abschalten des Antriebsmotors die Regelung für den Antriebsmotor unterbrochen und/oder abgeschaltet wird.

Bei einer Verteilmaschine, bei der der Antriebsmotor als Hydromotor ausgebildet ist, ist erfindungsgemäß vorgesehen, daß vor dem Hydromotor in der zu dem Hydromotor führenden Druckölleitung ein Dreiwegestromregelventil angeordnet ist, dessen Stellmotor über den Regelkreis geregelt wird, daß weiterhin in der zu dem Hydromotor führenden Drucköllleitung die als Wegeventil ausgebildete Abschalteinrichtung angeordnet ist, daß über das Wegeventil und der Regelkreis für den Stellmotor des Regelventils parallel geschaltet sind. Infolge dieser Maßnahme wird also bei dieser Ausbildung der Regelung gleichzeitig die Regelung für den Stellmotor automatisch unterbrochen bei der Unterbrechung des Ausbringvorganges, so daß das Regelventil die Einstellung beibehält und, wenn der Ausbringvorgang unterbrochen wird nicht gegen 0 geregelt wird, so daß bei Wiederaufnahme des Ausbringvorganges sofort wieder - und zwar ohne Totzeit - die Sollmenge ausgebracht werden kann.

In einfacher Weise kann hierbei der Regelkreis derart unterbrochen werden, daß das Wegeventil und die Schalteinrichtung für den Stellmotor parallel geschaltet sind.

Des weiteren ist erfindungsgemäß vorgesehen, daß bei Abschalten der Regelung für den Antriebsmotor die letzte aktuelle Stellung des Regelventils bzw. Stellmotors vor dem unmittelbaren Unterbrechen des Ausbringvorganges gespeichert und/oder beibehalten wird. Diese Speicherung erfolgt auch in vorteilhafter Weise in der elektronischen Schaltung, so daß bei Beginn des Ausbringvorganges ohne große Regelschwingungen die elektronische Einrichtung die Regelung des Antriebsmotors wieder vornehmen kann.

Weiterhin kann bei einer Verteilmaschine, die an dem Dreipunktkraftheber eines Schleppers angeordnet ist, in der Drucköllleitung des Dreipunktkrafthebers des Ackerschleppers ein Sensor angeordnet sein, der ein Signal erzeugt, wenn die Verteilmaschine zur Unterbrechung des Ausbringvorganges angehoben oder zum Ausbringen abgesenkt wird, wobei entsprechend dieses Signales der Regelkreis für den Stellmotor des Regelventils ab- oder eingeschaltet wird und zwar derart, daß beim Ausheben der Regelkreis aus- und beim Absenken eingeschaltet wird. Hierdurch wird die Regelung für den Antriebsmotor automatisch beim Ausheben der Verteilmaschine über den Dreipunktkraftheber unterbrochen, wenn über die separate Abstelleinrichtung ebenfalls automatisch der Antriebsmotor für die Dosierorgane abgeschaltet wird.

Weitere Einzelheiten der Erfindung sind der Beispielsbeschreibung und den Zeichnungen zu entnehmen. Hierbei zeigt

Fig. 1    die in erfindungsgemäßer Weise ausgebildete Einzelkorndrillmaschine in Prinzipdarstellung in der Draufsicht, wobei an der Antriebswelle der Einzelkornsägeräte ein regelbarer Antriebsmotor angeordnet ist,

Fig. 2    die Eingabetastatur eines Mikroprozessors,

Fig. 3    eine weitere, in erfindungsgemäßer Weise ausgebildete Einzelkorndrillmaschine ebenfalls in Prinzipdarstellung in der Draufsicht, wobei jedem Einzelkornsägerät ein eigener regelbarer Antriebsmotor zugeordnet ist,

Fig. 4    die als Einzelkorndrillmaschine in erfindungsgemäßer Weise ausgebildete Verteilmaschine in Prinzipdarstellung in der Ansicht von oben,

Fig. 5    eine erfindungsgemäß ausgebildete Verteilmaschine in der Draufsicht und

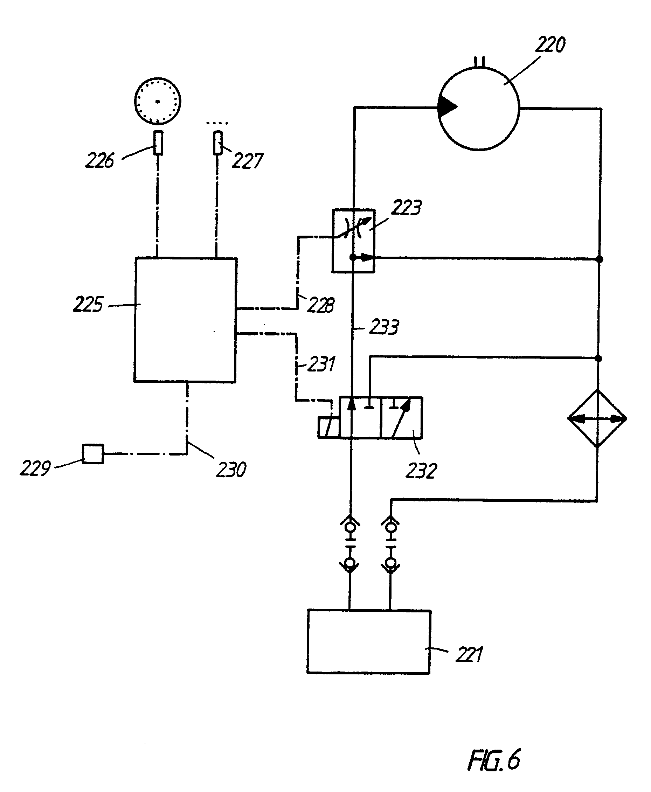

Fig. 6    das Blockschaltbild der elektronisch hydraulischen Regelung.

Die Einzelkorndrillmaschine weist den Tragrahmen 1 auf, an dem die einzelnen Einzelkornsägeräte 2, das Saugluftgebläse 3 sowie der Dreipunktanbaubock 4 zum Anbau an einen Schlepperkraftheber sowie die Laufräder 5, angeordnet sind. Während des Betriebes stützt sich die Einzelkorndrillmaschine über die Laufräder 5 auf dem Boden ab.

Die Laufräder 5 sind in dem Tragrahmen 6 jeweils drehbar gelagert. Diese Tragarme 6 sind jeweils zwischen zwei Einzelkornsägeräte 2 an dem Tragrahmen 1 mit Schrauben festgeklemmt. Die Einzelkornsägeräte 2 sind mit der parallelogrammartigen Halterung 7 jeweils an dem Tragrahmen 1 in aufrechter Ebene bewegbar angelenkt. Die parallelogrammartige Halterung 7 weist jeweils den Oberlenker 8 und den Unterlenker 9 auf. Hinter den Einzelkornsägeräten 2 ist jeweils die höheneinstellbare Tiefenführungs - und Druckrolle 10 angeordnet, mit der die Eindringtiefe der Säschare der Einzelkorngeräte 2 in den Boden bestimmt wird.

Die Einzelkornsägeräte 2 weisen den Vorratsbehälter 11 auf, von dem aus das sich in dem Vorratsbehälter 11 befindliche Saatgut zu dem jeweiligen Vereinzelungsorgan des jeweiligen Einzelkornsägerätes 2 gelangt. Die Vereinzelung des Saatgutes durch das Vereinzelungsorgan erfolgt in bekannter und daher nicht näher erläuteter Weise. Jedes Vereinzelungsorgan wird von dem Saugluftgebläse 3 über die Schlauchleitung 12 mit Saugluft beaufschlagt. Der Antrieb der jeweils unterhalb des Vorratsbehälter 11 angeordneten Vereinzelungsorgane erfolgt von der zentralen Antriebswelle 13 über eine in dem Unterlenker 9 angeordneten Antriebsvorrichtung. Der Antrieb der zentralen Antriebswelle 13 erfolgt über den Hydraulikmotor 14 der an die Antriebswelle 13 angeflanscht ist. Über die Hydraulikschläuche 15 läßt sich der Hydraulikmotor 14 mit dem Hydrauliksystem des die Einzelkorndrillmaschine transportierenden Ackerschleppers verbinden, so daß eine Beaufschlagung des Hydraulikmotors 14 mit Hydrauliköl zum Antrieb der Vereinzelungsorgane der Einzelkornsägeräte 2 führt. Der Hydraulikmotor 14 weist den angeflanschten Steuerblock 16 auf, in dem ein über einen Elektromotor zu verstellendes Hydraulikmengenventil angeordnet ist. Die Ansteuerung des Steuerblockes 16 erfolgt über das Kabel 17 das mit dem Mikroprozessor des auf dem Ackerschlepper angeordneten elektronischen Dosiergerätes 18 verbunden ist.

Dieses elektronische Dosiergerät 18 weist verschiedene Eingabe- und Informationstastaturen 19 auf. Über das Kabel 20 ist das elektronische Dosiergerät 18 mit einem bekannten und daher nicht näher dargestellten Geschwindigkeitssensor verbunden, der zur Ermittlung der momentanen Fahrgeschwindigkeit dient. Dieser Geschwindigkeitssensor ist an einem nicht angetriebenen Rad, beispielsweise am vorderen Rad des Schleppers oder einem Laufrad 5 der Einzelkorndrillmaschine angeordnet. Des weiteren weist das Dosiergerät 18 das Kabel 21 auf, das mit einem an dem Dreipunktkraftheber des Ackerschleppers angeordneten Sensor verbunden ist. Mit Hilfe dieses Sensors wird der Antrieb der Vereinzelungsorgane über den Hydraulikmotor 14 gesteuert, d.h., beim Absenken des Dreipunktkrafthebers zum Überführen der Einzelkorndrillmaschine in die Betriebsstellung wird der Hydraulikmotor 14 mit Hydrauliköl beaufschlagt, so daß die Vereinzelungsorgane der Einzelkornsägeräte 2 angetrieben werden. Beim Ausheben der Einzelkorndrillmaschine erfolgt sofort eine Unterbrechung der Ölzufuhr zu dem Hydraulikmotor 14, so daß der Antrieb der Vereinzelungsorgane unterbrochen ist und kein Saatgut abgegeben wird. Durch eine in den jeweiligen Unterlenkern 9 angeordneten Antriebsunterbrechungseinrichtung läßt sich der Antrieb zu den einzelnen Einzelkornsägeräten 2 unterbrechen.

Das am Dosiergerät 18 angeordnete Kabel 22 führt zu einem am Vereinzelungsorgan oder an seiner Antriebseinrichtung angeordneten Sensor, der die momentane Anzahl der pro Flächeneinheit ausgesäten Saatkörner erfaßt und an das elektronische Dosiergerät 18 übermittelt. Durch Veränderung der Drehzahl der zentralen Antriebswelle 13 über den Hydraulikmotor 14 läßt sich der Ablegeabstand der einzelnen Saatkörner zueinander stufenlos variieren, so daß ein Verändern der pro Flächeneinheit ausgebrachten Saatkörner in besonders einfacher Weise möglich ist.

Das Einstellen der pro Flächeneinheit auszusäenden Saatkörner erfolgt über die Eingabetastatur 19 des elektronischen Dosiergerätes 18. Zu Beginn der Säarbeit braucht der Landwirt nur die von ihm gewünschte Anzahl der pro Flächeneinheit auszusäenden Saakörner, unter Berücksichtigung der Reihenweite von beispielsweise 90.000 Saatkörner, pro Hektar, über die entsprechenden Tasten des Dosiergerätes 18 in den Mikroprozessor einzugeben, und es erfolgt eine automatische, entsprechende Einstellung des Hydraulikmotors 14. Dieser eingestellte Wert wird während des Sävorganges ständig überwacht und ein Nichteinhalten der gewünschten Aussaatmenge führt sofort zu einer entsprechenden Verstellung des Hydraulikmotors 14, so daß stets die pro Flächeneinheit gewünschte Anzahl der Saatkörner eingehalten wird. Dieser eingegebene Ausbringmengenwert läßt sich während des Sävorganges beliebig verändern, so daß eine optimale Anpassung der erforderlichen Saatgutmenge an die jeweiligen Bodenverhältnisse erfolgen kann.

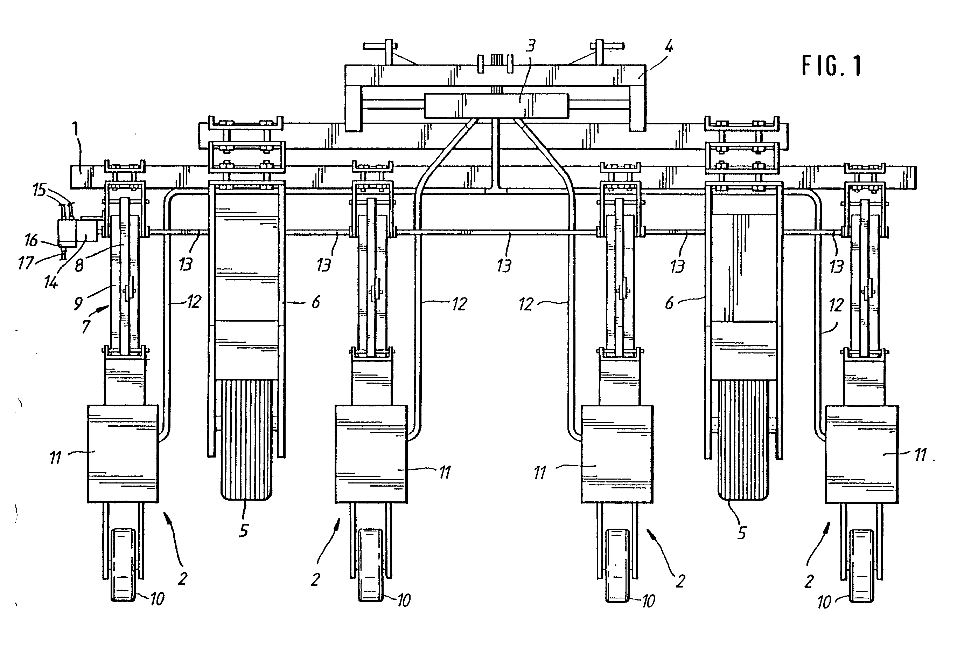

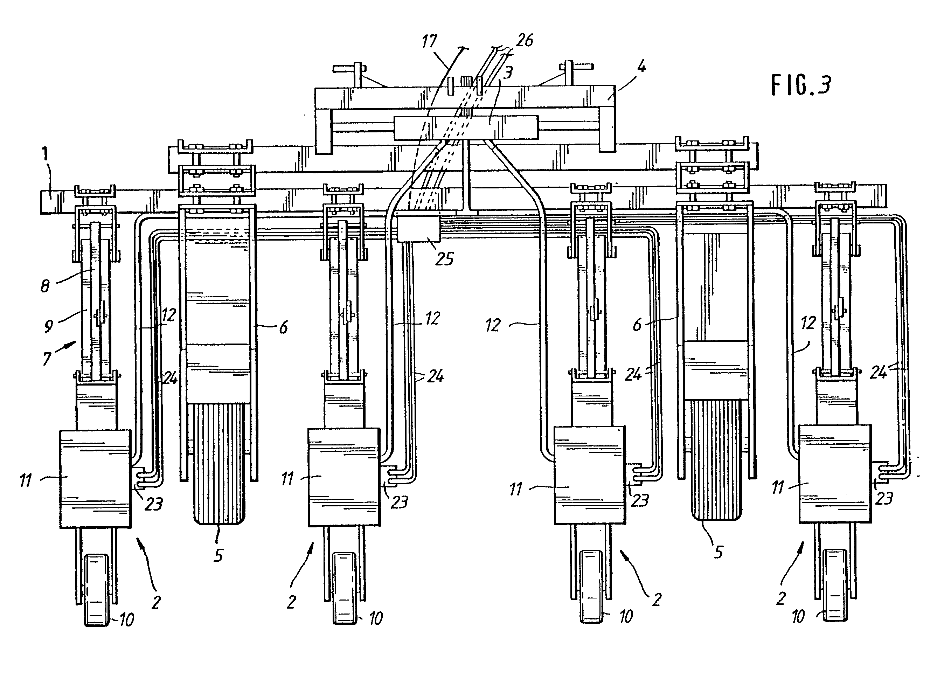

Die Einzelkorndrillmaschine gemäß Fig. 3 unterscheidet sich nur durch einen andersartig ausgebildeten Antrieb der Vereinzelungsorgane von der Einzelkorndrillmaschine gemäß Fig. 1. Bei dieser Einzelkorndrillmaschine ist jedem Einzelkornsägerät 2 ein eigener regelbarer Hydraulikmotor 23 zugeordnet. Über die Hydraulikleitungen 24 sind die Hydraulikmotore 23 mit dem Hydraulikmengenventil 25 verbunden. Dieses Hydraulikmengenventil 25 ist wiederum über die Hydraulikschläuche 26 mit dem Hydrauliksystem des die Einzelkorndrillmaschine tragenden Ackerschleppers verbunden. Über das Kabel 17 ist das elektrisch zu betätigende Hydraulikmengenventil 25 mit dem elektronischen Dosiergerät 18 verbunden. Die einzelnen Hydraulikmotore 23 lassen sich mit unterschiedlichen Ölmengen beaufschlagen, so daß sich die Vereinzelungsorgane der Einzelkornsägeräte 2 mit unterschiedlichen Drehzahlen antreiben lassen. Hierdurch ist es möglich, die Saatkörner der nebeneinander angeordneten Einzelkornsägeräte 2 in unterschiedlichen Abständen zueinander abzulegen. Hierbei ist dann jedem Vereinzelungsorgan ein Aufnahmesensor zur Ermittlung der momentanen Aussaatmenge zugeordnet, wobei sich die jeweilige Anzahl der auszusäenden Saatkörner auf dem Monitor des elektronischen Dosiergerätes 18 anzeigen läßt.

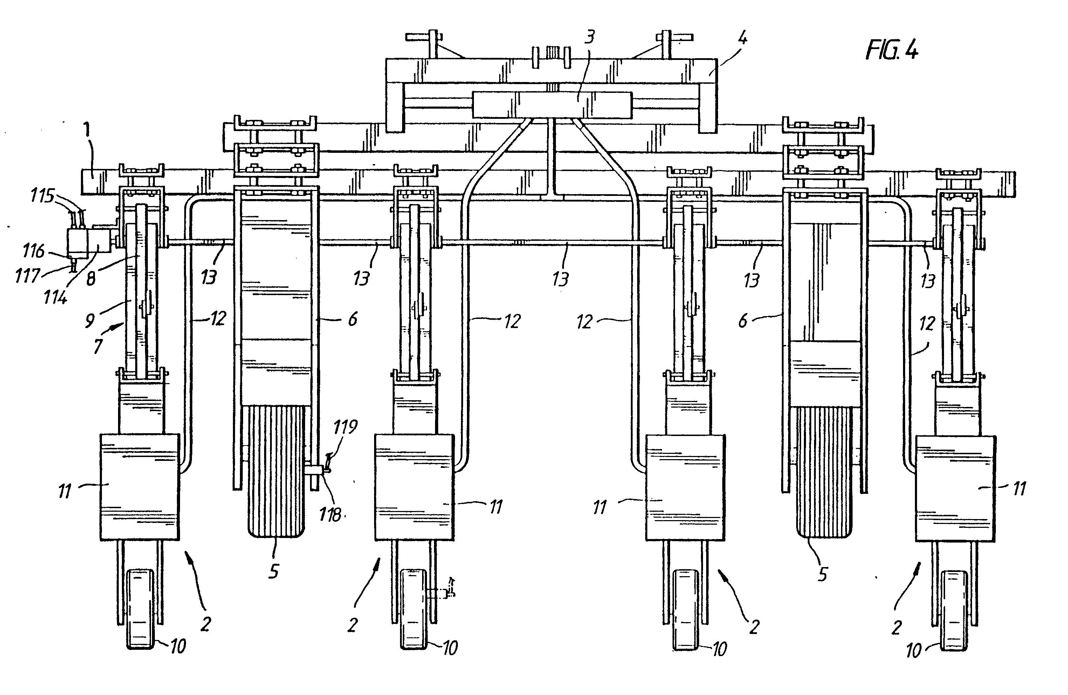

Die als Einzelkorndrillmaschine ausgebildete Verteilmaschine gemäß Fig. 4 weist den Tragrahmen 1 auf, an dem die einzelnen Einzelkornsägeräte 2, das Saugluftgebläse 3 sowie der Dreipunktanbaubock 4 zum Anbau an einen Schlepperkraftheber sowie die Laufräder 5, angeordnet sind. Während des Betriebes stützt sich die Einzelkorndrillmaschine über die Laufräder 5 auf dem Boden ab.

Die Laufräder 5 sind in den Tragarmen 6 jeweils drehbar gelagert. Diese Tragarme 6 sind jeweils zwischen zwei Einzelkornsägeräte 2 an dem Tragrahmen 1 mit Schrauben festgeklemmt. Die Einzelkornsägeräte 2 sind mit der parallelogrammartigen Halterung 7 jeweils an dem Tragrahmen 1 in aufrechter Ebene bewegbar angelenkt. Die parallelogrammartige Halterung 7 weist jeweils den Oberlenker 8 und den Unterlenker 9 auf. Hinter den Einzelkornsägeräten 2 ist jeweils die höheneinstellbare Tiefenführungs - und Druckrolle 10 angeordnet, mit der die Eindringtiefe der Säschare der Einzelkorngeräte 2 in den Boden bestimmt wird.

Die Einzelkornsägeräte 2 weisen den Vorratsbehälter 11 auf, von dem aus das sich in dem Vorratsbehälter 11 befindliche Saatgut zu dem jeweiligen Vereinzelungsorgan des jeweiligen Einzelkornsägerätes 2 gelangt. Die Vereinzelung des Saatgutes durch das Vereinzelungsorgan erfolgt in bekannter und daher nicht näher erläuteter Weise.

Jedes Vereinzelungsorgan wird von dem Saugluftgebläse 3 über die Schlauchleitung 12 mit Saugluft beaufschlagt. Der Antrieb der jeweils unterhalb des Vorratsbehälter 11 angeordneten Vereinzelungsorgane erfolgt von der zentralen Antriebswelle 13 über eine in dem Unterlenker 9 angeordnete Antriebsvorrichtung. Der Antrieb der zentralen Antriebswelle 13 erfolgt über den Hydraulikmotor 114, der an die Antriebswelle 13 angeflanscht ist. Über die Hydraulikschläuche 115 läßt sich der Hydraulikmotor 114 mit dem Hydrauliksystem des die Einzelkorndrillmaschine transportierenden Ackerschleppers verbinden, so daß eine Beaufschlagung des Hydraulikmotors 114 mit Hydrauliköl zum Antrieb der Vereinzelungsorgane der Einzelkornsägeräte 2 führt. Der Hydraulikmotor 114 weist den angeflanschten Steuerblock 116 auf, in dem ein über einen Elektromotor zu verstellendes Hydraulikmengenventil angeordnet ist. Die Ansteuerung des Steuerblockes 116 erfolgt über das Kabel 117, das mit dem Mikroprozessor des auf dem Ackerschlepper angeordneten elektronischen Dosiergerätes verbunden ist.

Diesem Dosiergerät 18 werden verschiedene Informationen wie beispielsweise die momentane Fahrgeschwindigkeit oder die momentane Anzahl der pro Flächeneinheit ausgesäten Saatkörner übermittelt. Mittels des Mikroprozessors des Dosiergerätes 18 erfolgt eine Regelung der gewünschten Ausbringmenge pro Flächeneinheit in Abhängigkeit von der Fahrgeschwindigkeit. Durch Veränderung der Drehzahl der zentralen Antriebswelle 13 über den Hydraulikmotor 114 läßt sich der Ablegeabstand der einzelnen Saatkörner zueinander stufenlos variieren, so daß ein Verändern der pro Flächeneinheit ausgebrachten Saatkörner in besonders einfacher Weise möglich ist.

Das Einstellen der pro Flächeneinheit auszusäenden Saatkörner erfolgt mittels des elektronischen Dosiergerätes. Zu Beginn der Säarbeit braucht der Landwirt nur die von ihm gewünschte Anzahl der pro Flächeneinheit auszusäenden Saatkörner, unter Berücksichtigung der Reihenweite von beispielsweise 90.000 Saatkörner pro Hektar, über die entsprechenden Tasten des Dosiergerätes in den Mikroprozessor einzugeben, und es erfolgt eine automatische, entsprechende Einstellung des Hydraulikmotors 114. Dieser eingestellte Wert wird während des Sävorganges ständig überwacht und ein Nichteinhalten der gewünschten Aussaatmenge führt sofort zu einer entsprechenden Verstellung des Hydraulikmotors 114, so daß stets die pro Flächeneinheit gewünschte Anzahl der Saatkörner eingehalten wird. Dieser eingegebene Ausbringmengenwert läßt sich während des Sävorganges beliebig verändern, so daß eine optimale Anpassung der erforderlichen Saatgutmenge an die jeweiligen Bodenverhältnisse erfolgen kann.

Zur automatischen Unterbrechung des Antriebes der Vereinzelungsorgane beim Unterbrechen des Ausbringvorganges, beispielsweise beim Wenden am Feldende zudem die Maschine ausgehoben wird, oder bei einem sonstigen Stillstand der Maschine ist der Sensor 118 am Tragarmen 6 befestigt und wirkt mit dem drehbar in dem Tragarmen 6 gelagerten Laufrad 5 zusammen. Dieser Sensor 118 ist über das Kabel 119 mit dem auf dem nicht dargestellten Schlepper angeordneten Dosiergerät verbunden, stellt das Rollen oder Nichtrollen des Rades 5 fest und liefert über das Kabel 119 entsprechende Informationen an das Dosiergerät. Bei einem Stillstand des Laufrades 5 erfolgt eine entsprechende Ansteuerung des Steuerblockes 116 des Hydraulikmotors 114, so daß die Ölzufuhr zu dem Hydraulikmotor 114 unterbrochen wird und die Vereinzelungsorgane nicht mehr über die zentrale Antriebswelle 13 angetrieben werden. Es wird also kein Saatgut mehr ausgebracht. Nachdem die Laufräder 5 wieder rotieren, werden die Vereinzelungsorgane der Einzelkornsägeräte 2 wieder ordnungsgemäß angetrieben, so daß Saatgut ausgebracht wird. Der Sensor 118 zur Feststellung der Rotation eines Rades, kann wie mit strichpunktierten Linien dargestellt, auch beispielsweise an der Tiefenführungs- und Druckrolle 10 angeordnet sein.

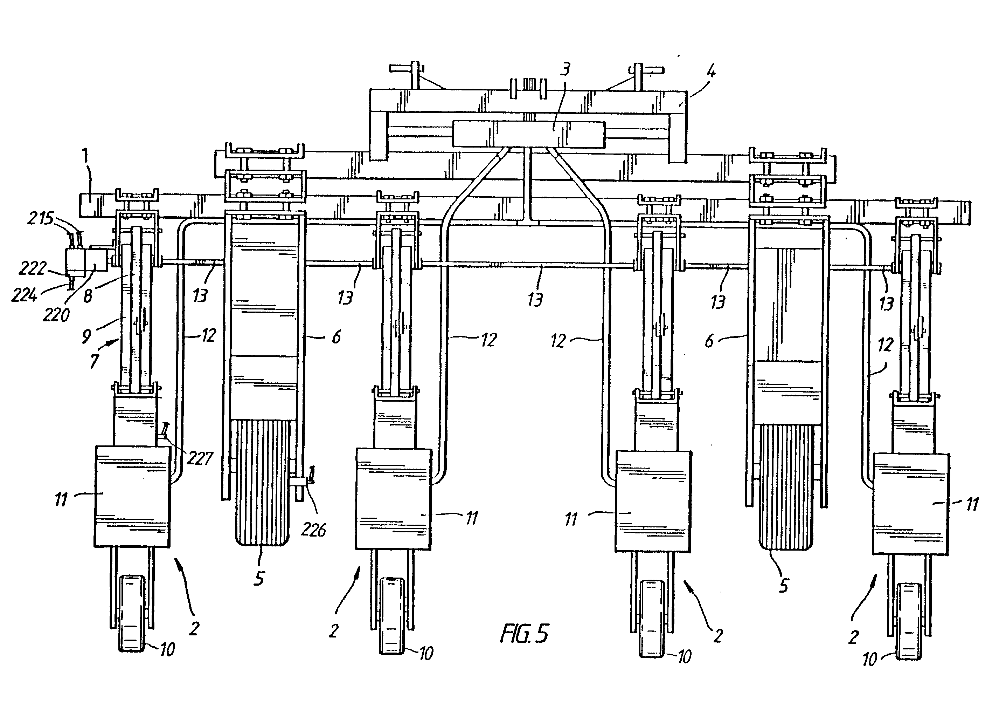

Die als Einzelkornsämaschine ausgebildete Verteilmaschine gemäß Fig. 5 weist den Tragrahmen 1 auf, an dem die einzelnen Einzelkornsägeräte 2, das Saugluftgebläse 3 sowie der Dreipunktanbaubock 4 zum Anbau an einen Schlepperkraftheber sowie die Laufräder 5, angeordnet sind. Während des Betriebes stützt sich die Einzelkorndrillmaschine über die Laufräder 5 auf dem Boden ab.

Die Laufräder 5 sind in den Tragarmen 6 jeweils drehbar gelagert. Diese Tragarme 6 sind jeweils zwischen zwei Einzelkornsägeräte 2 an dem Tragrahmen 1 mit Schrauben festgeklemmt. Die Einzelkornsägeräte 2 sind mit der parallelogrammartigen Halterung 7 jeweils an dem Tragrahmen 1 in aufrechter Ebene bewegbar angelenkt. Die parallelogrammartige Halterung 7 weist jeweils den Oberlenker 8 und den Unterlenker 9 auf. Hinter den Einzelkornsägeräten 2 ist jeweils die höheneinstellbare Tiefenführungs - und Druckrolle 10 angeordnet, mit der die Eindringtiefe der Säschare der Einzelkorngeräte 2 in den Boden bestimmt wird.

Die Einzelkornsägeräte 2 weisen den Vorratsbehälter 11 auf, von dem aus das sich in dem Vorratsbehälter 11 befindliche Saatgut zu dem jeweiligen Vereinzelungsorgan des jeweiligen Einzelkornsägerätes 2 gelangt. Die Vereinzelung des Saatgutes durch das Vereinzelungsorgan erfolgt in bekannter und daher nicht näher erläuteter Weise. Jedes Vereinzelungsorgan wird von dem Saugluftgebläse 3 über die Schlauchleitung 12 mit Saugluft beaufschlagt. Der Antrieb der jeweils unterhalb des Vorratsbehälter 11 angeordneten Vereinzelungsorgane erfolgt von der zentralen Antriebswelle 13 über eine in dem Unterlenker 9 angeordnete Antriebsvorrichtung. Der Antrieb der zentralen Antriebswelle 13 erfolgt über den als Hydraulikmotor 20 ausgebildeten Antriebsmotor, der an die Antriebswelle 13 über eine Kupplung angeflanscht ist.

Über die Hydraulikschläuche 215 läßt sich der Hydraulikmotor 220 mit dem Hydrauliksystem 221 des die Einzelkorndrillmaschine ziehenden Ackerschleppers verbinden, so daß eine Beaufschlagung des Hydraulikmotors 220 mit Hydrauliköl zum Antrieb der Vereinzelungsorgane der Einzelkornsägeräte 2 führt. Der Hydraulikmotor 220 weist den angeflanschten Steuerblock 222 auf, der ein über einen Elektromotor zu verstellendes als Dreiwegestromventil 223 Hydraulikmengenventil aufweist. Die Ansteuerung des Steuerblockes 222 erfolgt über das Kabel 224, das mit dem Mikroprozessor der auf dem Ackerschlepper angeordneten elektronischen Einrichtung 225, die eine Anzeige und ein Bedienungsfeld aufweist, verbunden ist. Diese Einrichtung 225 ist als Regeleinrichtung ausgebildet.

Dieser Einrichtung 225 werden die verschiedenen Informationen wie beispielsweise die momentane Fahrgeschwindigkeit über die Sensoreinheit 226 oder die momentane Anzahl der pro Flächeneinheit ausgesäten Saatkörner mittels des Sensors 227 übermittelt. Mittels des Mikroprozessors der Einrichtung 225 erfolgt eine Regelung der gewünschten Ausbringmenge pro Flächeneinheit in Abhängigkeit von der Fahrgeschwindigkeit. Durch Veränderung der Drehzahl des die zentrale Antriebswelle 13 antreibenden Hydraulikmotor 220 über das Dreiwegestromventil 223 läßt sich der Ablegeabstand der einzelnen Saatkörner zueinander stufenlos variieren, so daß ein Verändern der pro Flächeneinheit ausgebrachten Saatkörner in besonders einfacher Weise möglich ist. Hierbei wird das Dreiwegestromventil 223 über einen Elektromotor der über die Streuleitung 228 von der Einrichtung 225 gesteuert wird, entsprechend nachgeregelt bzw. verstellt.

Das Einstellen der pro Flächeneinheit auszusäenden Saatkörner erfolgt mittels der elektronischen Einrichtung 225. Zu Beginn der Säarbeit braucht der Landwirt nur die von ihm gewünschte Anzahl der pro Flächeneinheit auszusäenden Saatkörner, unter Berücksichtigung der Reihenweite von beispielsweise 90.000 Saatkörner pro Hektar, über die entsprechenden Tasten des Bedienungsfeldes der Einrichtung 225 in den Mikroprozessor einzugeben, und es erfolgt automatisch eine entsprechende Einstellung des Hydraulikmotors 220 über das Dreiwegestromregelventil 223. Dieser eingestellte Wert wird während des Sävorganges ständig mittels des Sensors 227 und der Sensorik 226 in der Einrichtung 225 überwacht und ein Nichteinhalten der gewünschten Aussaatmenge führt sofort zu einer entsprechenden Verstellung des Dreiwegestromregelventils 223, so daß stets die pro Flächeneinheit gewünschte Anzahl der Saatkörner bzw. die Solldrehzahl des Hydraulikmotors 220 eingehalten wird. Dieser eingegebene Ausbringmengenwert läßt sich während des Sävorganges beliebig verändern, so daß eine optimale Anpassung der erforderlichen Saatgutmenge an die jeweiligen Bodenverhältnisse erfolgen kann.

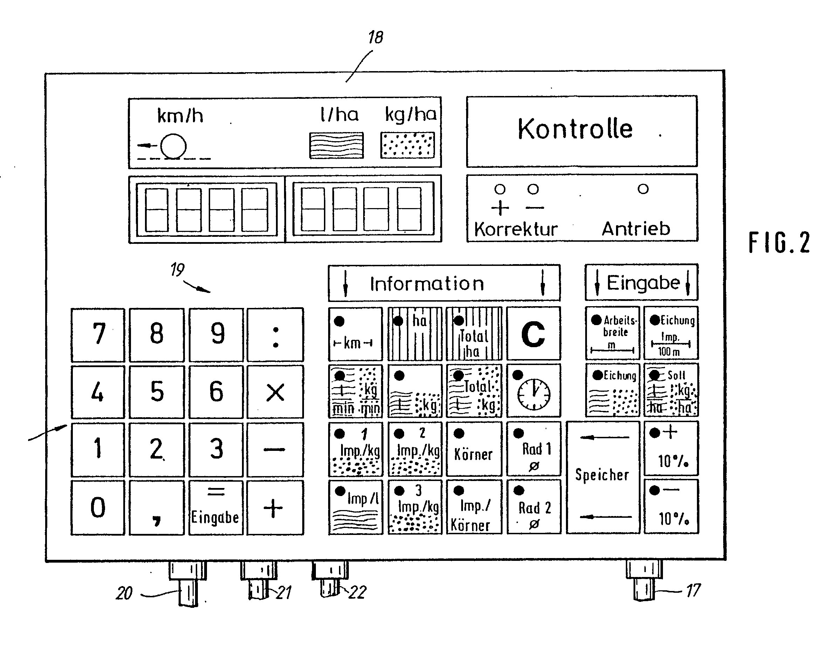

Zur automatischen Unterbrechung des Antriebes der Vereinzelungsorgane beim Unterbrechen des Ausbringvorganges, beispielsweise beim Wenden am Feldende zu dem die Maschine ausgehoben wird, wird über den in der Druckleitung des Dreipunktkrafthebers des Schleppers angeordneten Sensor 229, der über die Leitung 230 mit der Einrichtung 225 verbunden, ein Signal abgegeben, oder bei einem sonstigen Stillstand der Maschine wird über den Sensor 226 ein entsprechendes Signal an die Einrichtung 225 abgegeben. Aufgrund eines dieser beiden Signale von den Sensoren 229 und 226, wird bei einer Unterbrechung des Ausbringvorganges automatisch von der Einrichtung 225 über die Leitung 231 in dem Kabel 224 der Steuerblock 222 angesteuert und die Ölzufuhr zu dem Hydraulikmotor 20 unterbrochen, so daß die Vereinzelungsorgane nicht mehr über die zentrale Antriebswelle 213 angetrieben werden. Es wird als kein Saatgut mehr ausgebracht. Hierzu weist der Steuerblock das Wegeventil 232 (vgl. Blockschaltbild Fig. 2) auf, welches als 3/2 Wegeventil mit einer elektromagnetischen Betätigung ausgebildet ist und in der zu dem Hydromotor 220 führenden Drucköllleitung 233 angeordnet ist. Dieses Wegeventil 232 bildet die schnelle und schlagartige Abschalteinrichtung für den Hydraulikmotor 220 bei Unterbrechen des Ausbringvorganges. Wenn der Ausbringvorgang fortgesetzt wird und die Maschine über den Dreipunktkraftheber des Schleppers abgesenkt ist, bzw. die Fahrgeschwindigkeitssensorik 226 Signale liefert, daß die Ausbringarbeit fortgesetzt wird, wird von der Einrichtung 225 das Wegeventil 232 über die Leitung 231 geschaltet, damit wieder Drucköl über die Drucköllleitung 233 und das Regelventil 223 dem Hydraulikmotor 220 zugeführt wird. Somit treibt der Hydraulikmotor 220 wieder die Dosierorgane an. Bei Abschalten des Hydraulikmotors 220 durch die Einrichtung 225 über das Wegeventil 232 wird die Regelung für das Dreiwegestromregelventil 223 automatisch unterbrochen. Diese Regelung wird automatisch wieder eingeschaltet, wenn durch die Einrichtung 225 über das Wegeventil 232 die Druckölzufuhr zu dem Hydraulikmotor 220 wieder eingeschaltet wird. Dieses soll im folgenden noch näher erläutert werden:

Wie bereits vor ausgeführt, wird die Drehzahl des Hydromotors 220 über das Dreiwegestromregelventil 223 eingestellt und bestimmt, in dem von der Einrichtung 225 aufgrund der dieser Einrichtung 225 vorliegenden Informationen und Angaben von Sollmenge, Fahrgeschwindigkeit etc. über die Steuerleitung 228 das Regelventil 223 entsprechend angesteuert wird und über den dem Regelventil 223 zugeordneten elektrischen Stellmotor entsprechend eingeregelt bzw. eingestellt wird. Der Einrichtung 225 werden von der Sensorik 226, welche über bekannte und daher nicht näher dargestellte Einrichtungen die aktuelle Fahrgeschwindigkeit der Verteilmaschine ermittelt, Informationen über die aktuelle Fahrgeschwindigkeit zugeführt. Des weiteren werden der Einrichtung 225 über die Sensorik 227, die an den Dosierorganen angeordnet ist, die tatsächliche Drehzahl der Dosierorgane bzw. Signale oder Informationen über die tatsächliche Anzahl oder Menge von Material zugeleitet. Außerdem kann noch ein Sensor 229, der in der Druckölleitung des Dreipunktkrafthebers des Schleppers angeordnet ist, vorhanden sein, der über die Leitung 230 mit der Einrichtung 225 verbunden sein, der Einrichtung 225 meldet, ob die Verteilmaschine abgesenkt oder angehoben ist. Somit wird aufgrund des Signals des Sensors 225 bei angehobener Verteilmaschine der Hydraulikmotor abund bei abgesenkter Verteilmaschine eingeschaltet. Der Antriebsmotor 220 ist über die als Regeleinrichtung ausgebildete Einrichtung 225 und dem Dreistromregelventil 223 in einem Regelkreis angeordnet, dessen Führungsgröße die aktuelle Fahrgeschwindigkeit während des Ausbringvorganges ist. Diese Regelung ist nun derart ausgelegt, daß bei einem Abschalten des Antriebsmotors 220 durch die Einrichtung 225 über das Wegeventil 232, die Regelung über den Antriebsmotor 220 gleichzeitig unterbrochen und abgeschaltet wird. Dies bedeutet also, daß, wenn die Verteilmaschine ausgehoben bzw. angehalten wird, die Regelung des Dreistromregelventils 223 unterbrochen wird, in dem in einfachster Weise die Stromzufuhr zu dem Stellmotor des Dreiwegestromregelventils 223 unterbrochen wird. Somit wird also bei Unterbrechung des Ausbringvorganges der Hydraulikmotor 220 nicht über das Dreiwegestromregelventil 223 bis zum Stillstand geregelt, sondern es erfolgt eine plötzliche Abschaltung der Drucköizufuhr zu dem Hydraulikmotor 220 über das Wegeventil 232 und gleichzeitig wird der Regelkreis für den Stellmotor des Dreiwegestromregelventils 223 abgeschaltet, wenn die Drucköizufuhr zu dem Hydromotor 220 über das Wegeventil 232 unterbrochen wird. Es wird also beim Abschalten der Regelung für den Antriebsmotor 220 die letzte aktuelle Stellung des Regelventils 223 bzw. des Stellmotors vor dem unmittelbaren Unterbrechen des Ausbringvorganges beibehalten. Gleichzeitig wird diese letzte Stellung in dem Mikroprozessor der Einrichtung 225 gespeichert. Wenn nun der Ausbringvorgang wieder fortgesetzt wird, wird über die Fahrgeschwindigkeitssensorik 226 und/oder dem Sensor 229, der in der Druckölleitung des Dreipunktkrafthebers des Ackerschleppers angeordnet ist, ein entsprechendes Signal an die Einrichtung 225 übermittelt, durch welches der Einrichtung 225 mitgeteilt wird, daß der Ausbringvorgang wieder fortgesetzt wird. Aufgrund dieses Signales wird dann von der Einrichtung 225 über die Steuerleitung 231 das Wegeventil 232 derart geschaltet, daß die Öldruckzufuhr zu dem Hydraulikmotor 220 über das Regelventil 223 wieder gewährleistet ist. Gleichzeitig wir die Regelung wieder eingeschaltet, so daß das Regelventil 223 entsprechend von der Einrichtung 225 geregelt wird. Da das Regelventil 223 in der letzten vor dem Ausbringvorgang aktuellen Stellung geblieben ist, wird sofort bei Beginn des Ausbringvorganges, ohne daß das Regelventil 223 über einen langen Stellweg erst wieder auf die Sollausbringmenge eingeregelt werden muß, sofort die Sollausbringmenge ausgebracht, da der Hydraulikmotor 220 sehr schnell, praktisch schlagartig wieder die Solldrehzahl einnehmen kann.

## Ansprüche

1.  Vorrichtung bestehend aus eine Ackerschlepper und einer an dem Dreipunktkraftheber des Ackerschleppers angeordneten Verteilmaschine mit einem Rahmen (1) und einem Vorratsbehälter (11), dem angetriebene Dosierorgane zugeordnet sind, die von einem regelbaren Antriebsmotor (114) antreibbar sind, wobei dem Antriebsmotor (114) eine Abschalteinrichtung (116) zum automatischen Abschalten des Antriebsmotors zugeordnet ist, und wobei die Abschalteinrichtung (116) einen Sensor aufweist, dadurch gekennzeichnet, daß an dem Dreipunktkraftheber des Ackerschleppers ein oder mehrere Sensoren angeordnet sind, daß diese Sensoren mit der Abschalteinrichtung (116) verbunden sind, und daß diese Sensoren derart ausgebildet sind, daß sie beim Anheben oder Absenken des Dreipunktkrafthebers entsprechende Signale an die Abschalt- oder Einschalteinrichtung (116) des Antriebsmotors (114) übermitteln und den Antriebsmotor (114) beim Anheben der Verteilmaschine abschalten.

2.  Vorrichtung nach Anspruch 1, dadurch gekennzeichnet, daß eine Regeleinrichtung für den Antriebsmotor (114) vorgesehen ist, daß über die Regeleinrichtung (223,225) der Antriebsmotor (114) in einem Regelkreis angeordnet ist, dessen Führungsgröße die aktuelle Fahrgeschwindigkeit der Verteilmaschine während des Ausbringvorganges ist, daß bei Abschalten des Antriebsmotors (114) die Regelung für den Antriebsmotor (220) unterbrochen wird.

3. Vorrichtung nach Anspruch 2, dadurch gekennzeichnet, daß der Antriebsmotor (114) als Hydromotor (220) ausgebildet ist, daß vor dem Hydromotor (220) in der zu dem Hydromotor (220) führenden Drucköleitung (233) ein Dreiwegestromregelventil (233) angeordnet ist, dessen Stellmotor über den Regelkreis geregelt wird, daß weiterhin in der zu dem Hydromotor (220) führenden Drucköleitung (233) die als Wegeventil (232) ausgebildete Abschalteinrichtung angeordnet ist, daß das Wegeventil (232) und der Regelkreis für den Stellmotor des Regelventils (223) parallel geschaltet sind.

4. Vorrichtung nach Anspruch 3, dadurch gekennzeichnet, daß das Wegeventil (232) und die Schalteinrichtung für den Stellmotor parallel geschaltet sind.

## Claims

1. A device comprising a tractor and a distributing machine located on the tractor's three-point power lift, with a frame (1) and a hopper (11), with which are associated metering units which are drivable by a regulable drive motor (114), there being associated with the drive motor (114) a shut-off device (116) for automatically switching off the drive motor, and in which the shut-off device (116) has a sensor, characterised in that one or more sensors are mounted on the tractor's three-point power lift, that these sensors are connected to the shut-off device (116), and that these sensors are so designed that, upon raising or lowering of the three-point power lift, they pass corresponding signals to the switch-off or switch-on device (116) of the drive motor (114), and switch off the drive motor (114) when the distributing machine is raised.

2. A device according to Claim 1, characterised in that a regulating device is provided for the drive motor (114), that the drive motor (114) is incorporated via this regulating device (223, 225) into a control circuit whose control input is the actual ground speed of the distributing machine during the distribution procedure, and that, when the drive motor (114) is switched off, the control system for the drive motor (220) is interrupted.

3. A device according to Claim 2, characterised in that the drive motor (114) is in the form of a hydraulic motor (220), that there is located, in front of the hydraulic motor (220) in the pressure oil pipe (233) leading to the hydraulic motor (220), a three-way flow-regulating valve (233) whose servo motor is controlled via the control circuit, that there is further located in the pressure oil pipe (233) leading to the hydraulic motor (220) the shut-off device designed as a distributing valve (232), that the distributing valve (232) and the control circuit for the servo motor of the regulating valve (223) are incorporated in parallel.

4. A device according to Claim 3, characterised in that the distributing valve (232) and the switching device for the servo motor are incorporated in parallel.

## Revendications

1. Dispositif comprenant un tracteur agricole et un semoir relié au dispositif de levage en trois points du tracteur agricole, ce semoir ayant un châssis (1) et un réservoir d'alimentation (11) auquel sont associés des organes de dosage susceptibles d'être entraînés par un moteur (114) réglable, le moteur (114) comportant un dispositif de coupure (116) pour couper automatiquement le moteur et le dispositif de coupure (116) comporte un capteur, caractérisé en ce que le dispositif de levage en trois points du tracteur agricole comporte un ou plusieurs capteurs reliés au dispositif de coupure (116) et ces capteurs sont conçus pour que lors du soulèvement ou de l'abaissement du dispositif de levage en trois points, ils transmettent des signaux correspondant au dispositif de coupure ou de mise en oeuvre (116) du moteur (114) et ce moteur (114) est coupé lors du soulèvement du semoir.

2. Dispositif selon la revendication 1, caractérisé par un dispositif de régulation du moteur (114) et le moteur (114) est branché dans un circuit de régulation par le dispositif de régulation (223, 225) dont la grandeur de consigne est la vitesse de déplacement réelle du semoir au cours d'une opération d'ensemencement, et en ce que lors de la coupure du moteur (114), la régulation du moteur est arrêtée.

3. Dispositif selon la revendication 2, caractérisé en ce que le moteur (114) est un moteur hydraulique (220) et en ce qu'en amont du moteur hydraulique (220), il est prévu une vanne distributrice de régulation de débit à trois voies (223) pour la conduite de fluide hydraulique sous pression (233) reliée au moteur hydraulique (220), vanne dont le moteur de régulation est réglé par un circuit de régulation et en ce que la conduite de fluide hydraulique sous pression (233) reliée au moteur (220) comporte un dispositif de coupure en forme de vanne à plusieurs voies (232) et cette vanne (232) et le circuit de régulation du moteur de réglage de la vanne de régulation (223) sont branchés en parallèle.

4. Dispositif selon la revendication 3, caractérisé en ce que la vanne à plusieurs voies (232) et le dispositif de coupure du moteur de réglage sont branchés en parallèle.

FIG. 1

FIG.2

EP 0 281 761 B1

FIG.3

EP 0 281 761 B1

FIG. 4

EP 0 281 761 B1

FIG. 5

EP 0 281 761 B1

FIG.6